# EUROPÄISCHE PATENTSCHRIFT

(11) **EP 3 757 075 B1**
(45) Veröffentlichungstag und Bekanntmachung des Hinweises auf die Patenterteilung: **08.10.2025**
(21) Anmeldenummer: 19182480.4
(22) Anmeldetag: 26.06.2019
(51) Int. Cl.: C02F 3/12, C02F 103/32, C02F 3/08, C02F 1/40, C02F 101/30, C02F 103/00

(54) **VERFAHREN ZUM BEHANDELN VON FETTHALTIGEN ABWÄSSERN**
METHOD FOR TREATING FAT-CONTAINING WASTEWATER
PROCÉDÉ DE TRAITEMENT DES EAUX USÉES GRASSES

(43) Veröffentlichungstag der Anmeldung: 30.12.2020
(73) Patentinhaber: Kessel SE + Co. KG, 85101 Lenting (DE)
(72) Erfinder: Kessel, Bernhard, 85101 Lenting (DE)
(74) Vertreter: Grünecker Patent- und Rechtsanwälte PartG mbB

(56) Entgegenhaltungen:
- GB-A- 2 526 848
- JP-A- 2006 136 816
- JP-A- 2011 182 782
- JP-A- 2014 226 615

## Beschreibung

Die vorliegende Erfindung betrifft ein Verfahren zum Behandeln von fetthaltigen Abwässern in einem Abscheidebehälter.

Um die Umweltbelastung durch Abwässer sowie die mechanische und chemisch-/biologische Belastung öffentlicher Abwassernetzwerke zu verringern ist es günstig, Abwässer vor deren Einleitung in die öffentlichen Abwassersysteme nachzubehandeln und dabei insbesondere bestimmte Stoffe oder Stoffarten aus dem Abwasser zu entnehmen und falls nötig gesondert zu entsorgen.

Besonders in Bezug auf Küchenabwässer ist es oft notwendig Fette und Öle, die typischerweise in relativ großen Mengen in Küchenabwässern vorhanden sind, abzutrennen. Insbesondere für kommerzielle und professionelle Großküchen, wie beispielsweise von Restaurants und Kantinen ist die Abscheidung von Fetten vor der Einleitung der Abwässer in das Abwassernetz oftmals sinnvoll und meist gesetzlich vorgeschrieben.

Ein gängiges, im Stand der Technik angewandtes Verfahren zur Abscheidung von Fetten basiert auf dem Dichteunterschied zwischen Wasser und Fett und der schlechten Mischbarkeit von Wasser und Fett, die im Allgemeinen dazu führt, dass sich Fett und Wasser trennen und das Fett schwerkraftbedingt aufschwimmt. Die sich unter dem aufschwimmenden Fett ausbildende Wasserschicht hat einen wesentlich geringeren Anteil an Fett als das Fett-Wassergemisch insgesamt.

Ein zweiter Ansatz zur Verringerung des Fettes basiert auf der Verwendung von aktiven Bestandteilen, welche das Fett in chemischen, biologischen oder chemisch-biologischen Prozessen umwandeln oder abbauen. Dabei werden Bakterien und/oder Enzyme in ein Fett-Wassergemisch eingebracht und wandeln oder zerlegen die Fettbestandteile im Rahmen ihres eigenen Stoffwechsels hauptsächlich in Wasser und Kohlendioxid um oder zerlegen es in Ihre Bestandteile. Viele dieser aktiven Bestandteile benötigen Sauerstoff um aktiv zu sein, einige Bakterien und Enzyme sind auch zu anaerober Umsetzung von Fetten fähig und benötigen daher nicht zwingend eine Sauerstoffzufuhr. Vor allem jene Fettbestandteile, die mit dem Abwasser eine Emulsion eingehen und daher über die Schwerkraft nur sehr schwer vom Wasser zu trennen sind, lassen sich mittels Bakterien und Enzymen aus dem Wasser trennen.

Die EP 1 614 662 A1 beschreibt ein gattungsgemäßes Verfahren und eine zugehörige Vorrichtung zur Nachbehandlung fetthaltiger Abwässer. Darin durchläuft das Abwasser eine Nachbehandlungsstrecke mit insgesamt vier in Reihe geschalteten Behältern, in denen unterschiedliche mechanische und chemische/biologische Prozesse ablaufen um den Fettanteil in dem zu klärenden Abwasser zu mindern. Das Abwasser wird über den Zulauf zunächst in einen Schwerkraftabscheider geleitet, in dem möglichst wenig Strömungsbewegung stattfindet, sodass ein großer Teil des Fettes vom Wasser getrennt wird. Anschließend wird das Wasser in einen Lamellenseparator geleitet, in dem eine weitere mechanische Trennung stattfindet, und im Folgenden in einen Bioreaktor geleitet, in welchem durch Mikroorganismen und Enzyme ein wie oben beschriebener Abbau von Fett erfolgt. Dabei wird von unten Druckluft in den Bioreaktor zugeführt, wodurch einerseits die Bakterien und Enzyme mit Sauerstoff versorgt werden und gleichzeitig durch die resultierenden aufsteigenden Luftblasen eine Durchmischung des Abwassers und der darin enthaltenen Bakterien und Enzyme erfolgt. Als letztes Glied in der Nachbehandlungsstrecke schließt sich an den Bioreaktor eine Nachstufe an, in der Sinkschlamm auf den Grund der Nachbehandlungsstrecke absinkt. Dieser Sinkschlamm kann über Führungsleitungen zurück in andere Abschnitte der Nachbehandlungsstrecke geführt werden.

In vorbekannten Nachbehandlungsstrecken erfolgen die Einleitung des Abwassers und die Abtrennung des Fettes stetig während des Regelbetriebes. Die Zuleitung in das offene System bedingt einen etwa gleichzeitigen oder zeitlich versetzten Abfluss des behandelten Abwassers, sodass die Gesamtmenge des Abwassers in der Nachbehandlungsstrecke während des Regelbetriebes etwa konstant bleibt. Durch die Durchleitung des Abwassers durch den Schwerkraftabscheider wächst an der Flüssigkeitsoberfläche ein kontinuierlich dicker werdender Fettpanzer, der in regelmäßigen Abständen im Rahmen einer Reinigungsroutine (Entsorgung) aufgebrochen, entfernt und entsorgt werden muss. Zur Entsorgung wird der Regelbetrieb der Abscheideanlage unterbrochen, sodass währenddessen kein Abwasser eingeleitet oder behandelt wird und insbesondere auch kein behandeltes Abwasser abfließt.

Zur Durchführung der Reinigungsroutine ist an dem Schwerkraft-Fettabscheider eine Entsorgungsleitung mit einer Pumpe vorgesehen. Unter Nutzung eines Mehrwegventils kann zunächst ein Teil des im Schwerkraft-Fettabscheider befindliche Wassers abgepumpt und im Anschluss kann nach der Betätigung des Mehrwegventils das restliche Wasser im Kreislauf gepumpt werden, um den Fettpanzer zu lösen und im Anschluss den so durchmischten Inhalt des Schwerkraft-Fettabscheiders abzupumpen. Zum Abschluss der Reinigungsroutine soll der zur schwerkraftgetriebenen Abscheidung verwendete Behälter möglichst leer sein, also kein Abwasser oder nur eine möglichst geringe Restmenge an Abwasser beinhalten. Vor dem erneuten Übergang in die Regelbetriebsphase erfolgt eine Auffüllung des Behälters mit Frischwasser.

Die Häufigkeit dieser Reinigungsvorgänge beziehungsweise der zeitliche Abstand zwischen zwei Reinigungsvorgängen hängt von der Durchflussmenge des Abwassers, dem Ausmaß des Fettgehaltes des Abwassers und vom Volumen des Schwerkraft-Fettabscheiders ab und stellt einen wesentlichen Kostenfaktor für den Betrieb der Abwasserbehandlungsanlage dar. Um Kosten und Stillstandzeiten möglichst gering zu halten, ist die Dauer der Durchmischung und des Abpumpens kurz zu wählen.

JP 2014 226615 A beschreibt ein Abwasserbehandlungsverfahren in einem Fettabscheider. Das Verfahren erfolgt in Form eines phasenbasierten Batch-Betriebs, bei dem die Verfahrensschritte in zeitlich getrennten Intervallen nacheinander ausgeführt werden.

Der vorliegenden Erfindung liegt die Aufgabe zugrunde, ein der obigen Gattung entsprechendes Verfahren vorzuschlagen, welches mit möglichst geringem Platzbedarf große Mengen an Fett aus fetthaltigen Abwässern abtrennen kann und kosteneffizient zu betreiben ist.

Diese Aufgabe wird erfindungsgemäß gelöst durch ein Verfahren nach Anspruch 1. Durch die Durchführung verschiedener Verfahrensphasen können die schwerkraftgetriebene Trennung und der biologisch-chemische Abbau von Fetten durch Bakterien und Enzyme effektiv in einem Abscheidebehälter durchgeführt werden. Durch die Homogenisierung des Inhaltes des Abscheidebehälters können zuvor entstandene Fettagglomerate aufgebrochen und verkleinert werden, sowie die Oberfläche von in dem Abwasser befindlichen Fettpartikeln vergrößert werden, um eine größere Angriffsfläche für Bakterien und/oder Enzyme bereitzustellen. Bakterien und Enzyme können ebenfalls gleichmäßig im Wasser verteilt werden. Durch die Homogenisierung von vor allem Wasser, Fett und etwaigen Bakterien/Enzymen kann die Effektivität des Fettabbaus erhöht werden. Besonders in einer Beruhigungsphase erfolgt der Abbau des im Abwasser verteilten Fettes. Dabei können sich die Homogenisierungs- und Beruhigungsphase auch bereichsweise überschneiden, vor allem in Hinblick auf die Aktivität von Bakterien und Enzymen. Insgesamt kann die Menge des sich im Abscheidebehälters ansammelnden Fettes verringert werden, sodass bei ansonsten gleichen Eingangsparametern seltener eine Entfernung des Fettes und Reinigung erfolgen kann.

Während der Beruhigungsphase kann das homogenisierte Abwasser zur Ruhe kommen, um in der anschließenden Einleitungsphase eine effektive schwerkraftgetriebene Abscheidung des Fettes zu ermöglichen. Auch diese beiden Phasen können sich überschneiden, sodass es während der Beruhigungsphase zu einer schwerkraftbetriebenen Abscheidung kommt.

Das Verfahren ist dabei nicht auf eine bestimmte Reihenfolge der Phasen festgelegt. So kann zeitlich auf die Einleitungsphase eine Homogenisierungsphase und dann eine Beruhigungsphase folgen und anschließend die gleiche Abfolge wieder durchlaufen werden. Alternativ können nach Durchlauf einer Einleitungsphase auch die Homogenisierungsphase und die Beruhigungsphase in mehrfacher Abfolge abwechselnd durchgeführt werden bevor wieder eine Einleitungsphase durchgeführt wird.

Die Einleitungsphase, Homogenisierungsphase und Beruhigungsphase können innerhalb eines ununterbrochenen Regelbetriebes ablaufen und als Teile des Regelbetriebes verstanden werden.

In einer Ausgestaltung der Erfindung kann während der Homogenisierungsphase und/oder der Beruhigungsphase kein wesentlicher Zufluss in den Abscheidebehälter erfolgen. Dadurch kann vermieden werden, dass Abwasser mit einem hohen Gehalt an Fett in nachfolgende Behälter oder das Abwassernetz abgegebenen wird, sodass möglichst viel Fett im Abscheidebehälter zurückgehalten wird.

Gemäß einer weiteren Alternative kann der homogenisierte Inhalt des Abscheidebehälters zwischen der Homogenisierungsphase und der Beruhigungsphase in dem Abscheidebehälter verbleiben. Dadurch können die Bakterien und/oder Enzyme auf das komplette im Abscheidebehälter befindliche Fett und Abwasser wirken.

Günstigerweise kann die Homogenisierungsphase und/oder die Beruhigungsphase getrennt von der Einleitungsphase erfolgen. Zum Beispiel können die Homogenisierungs- und Beruhigungsphase ohne wesentlichen Zufluss von unbehandeltem, fetthaltigen Abwasser durchgeführt werden. Dadurch kann der Inhalt des Abscheidebehälters während der Homogenisierungsphase und Beruhigungsphase beschränkt werden. Es lässt sich dadurch beispielsweise eine bessere Beruhigung erzielen. Insbesondere kann wenigstens eine dieser Phasen zu Zeiten stattfinden, in denen planmäßig kein oder nur wenig Abwasser in den Abscheidebehälter eingeleitet wird, zum Beispiel nachts oder während Zeiten der Betriebsruhe.

Gemäß einer Variante kann aus dem Abscheidebehälter entnommenes Abwasser direkt oder indirekt in wenigstens einen Nachbehandlungsbehälter geleitet werden, wobei Abwasser oder vom Abwasser separierte Bestandteile aus dem Nachbehandlungsbehälter während und/oder zu Beginn der Homogenisierungsphase in den Abscheidebehälter eingeleitet werden können. Im Nachbehandlungsbehälter abgeschiedene Bestandteile können vor allem absinkende oder aufsteigende Bestandteile, wie Schlämme, Fett und Bakterien oder Enzyme oder enthalten. Durch die Rückführung kann einerseits die Konzentration von Bakterien und Enzymen im Abscheidebehälter erhöht und gleichzeitig ein Reinigungseffekt im Nachbehandlungsbehälter erreicht werden. Durch den Zeitpunkt der Einleitung kann die Durchmischung von Fett, Wasser und einer möglichst großen Menge von Bakterien und/oder Enzyme den Abbau von Fett während der Homogenisierungsphase und in einer folgenden Beruhigungsphase gefördert werden.

Möglicherweise kann während der Homogenisierungsphase und/oder der Beruhigungsphase ein sauerstoffhaltiges Gas oder Gasgemisch in den Abscheidebehälter eingeleitet werden. Je nach Art der Bakterien und Enzyme wird ihre Aktivität durch die Zufuhr von Sauerstoff erhöht.

Gemäß einer Fortbildung der Erfindung können Bakterien und/oder Enzyme in einem Behälter bevorratet sein und wenigstens in den Abscheidebehälter und oder/einen Nachbehandlungsbehälter zugeführt werden. Dadurch kann zügig eine gewünschte Menge von Bakterien und/oder Enzymen in dem Abscheidebehälter und Nachbehandlungsbehälter eingestellt werden, da sie in dem Behälter schnell verfügbar sind. Beispielsweise kann schnell auf eine Veränderung der Menge von Bakterien und/oder Enzymen im Abscheidebehälter oder Nachbehandlungsbehälter reagiert werden und diese Menge eingestellt werden.

In einer günstigen Ausgestaltung kann innerhalb eines Verfahrenszyklus die Homogenisierungsphase wenigstens 10 Sekunden und insbesondere wenigstens 5 Minuten, und/oder nicht mehr als 1 Stunde oder 3 Stunden dauern. Durch die Wahl eines günstigen Zeitraumes für die Homogenisierung kann ein hoher Grad an Durchmischung im Abscheidebehälter erreicht werden. Insbesondere hat sich gezeigt, dass nach einer und besonders nach 5 bis 10 Minuten ein günstiger Homogenisierungszustand erreicht werden kann, während bei fortwährender Homogenisierung geringere Steigerungen des Mischungseffektes auftreten.

In einer weiteren geeigneten Ausführungsform kann innerhalb eines Verfahrenszyklus die Beruhigungsphase wenigstens eine Stunde und insbesondere wenigstens 2 Stunden und/oder nicht mehr als 9 oder 12 Stunden dauern. Durch eine ausreichende Zeit zur Beruhigung kann sich schwerkraftbedingte Schichtung von Fett und Wasser ausbilden, sodass in einer folgenden Einleitungsphase Abwasser eingeleitet und mit reduziertem Fettgehalt wieder ausgeleitet werden. Es hat sich gezeigt, dass ein solcher, günstiger Beruhigungszustand nach einer und insbesondere nach zwei Stunden eingestellt werden kann.

Im Folgenden soll die Erfindung anhand mehrerer beispielhafter Ausführungsbeispiele erläutert werden.

Es zeigen:
- Figur 1: eine schematische Darstellung einer ersten Ausführungsform einer Fettabscheideeinrichtung ohne Nachbehandlungsbehälter,
- Figur 2: eine schematische Darstellung einer zweiten Ausführungsform mit einem Nachbehandlungsbehälter, und
- Figur 3: eine schematische Darstellung einer dritten Ausführungsform mit einem Nachbehandlungsbehälter und einem Biologiebehälter.

Für gleiche oder sich entsprechende Elemente werden in Bezug auf die verschiedenen Figuren und Ausführungsbeispiel identische Referenzziffern verwendet. Auf eine erneute Diskussion von Elementen wird verzichtet, wenn diese bereits in Bezug auf eine andere Figur oder ein anderes Ausführungsbeispiel erläutert wurden. Unter Bezugnahme auf die identischen Bezugszeichen sollen einmal erfolgte Erläuterungen zu einer Figur oder einer Ausführungsform auch für alle folgenden Figuren und Ausführungsformen gelten.

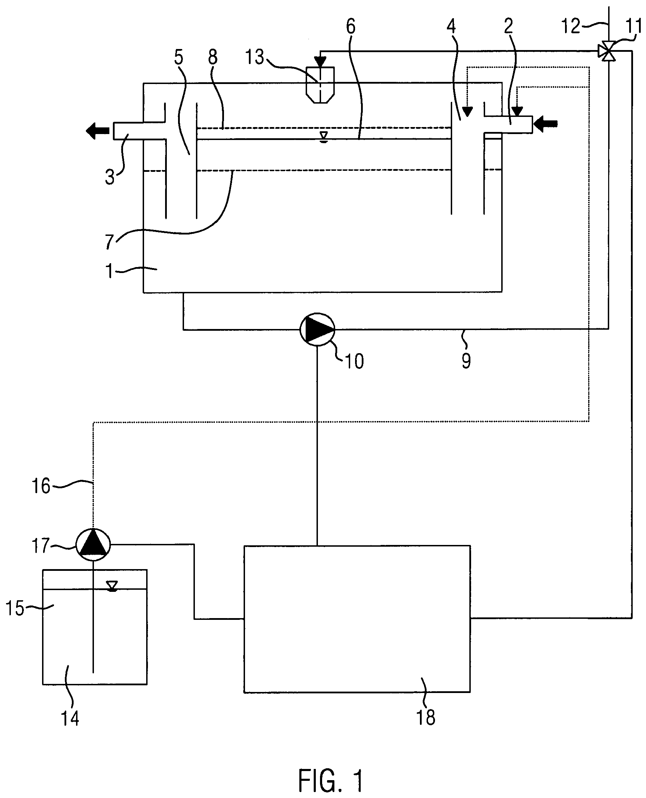

In Figur 1 ist ein Fettabscheidebehälter 1 gezeigt, welchem über einen Einlass 2 von außen Abwasser zugeführt werden kann und aus welchem durch einen Auslass 3 Abwasser abgeführt werden kann. Der Auslass 3 kann beispielsweise direkt mit der Kanalisation verbunden sein oder beispielsweise mit einem Sammelbehältnis oder folgenden Einrichtung zur Abwassernachbehandlung. Zur Strömungsberuhigung, also zur Verminderung von Flüssigkeitsbewegungen innerhalb des Fettabscheidebehälters ist der Einlass 2 mit einem Einströmkanal 4 verbunden und der Auslass mit einem Ausströmkanal 5 verbunden. Die unteren Öffnungen des Einströmkanals 4 und des Ausströmkanals 5 liegen unterhalb der Wasseroberfläche 6, welche ihre Wasserstandshöhe zwischen einem hier gestrichelt eingezeichneten Wasserstandsminimum 7 und einem Wasserstandsmaximum 8 verändern kann.

Der Einlass 2 und Auslass 3 können jeweils mit Ventilen, Klappen oder eigenen Pumpen versehen sein, um sie bei Bedarf zu sperren oder die einfließende und ausfließende Menge des Abwassers gezielt zu steuern. Im gezeigten Beispiel ist der Einlass 2 direkt mit einem Abwasserabfluss der Küche verbunden und auf einem niedrigen geodätischen Niveau angeordnet, sodass Küchenabwässer durch Schwerkraftwirkung direkt in den Fettabscheidebehälter 1 eingeleitet werden. Dieser Zulauf steigert den Flüssigkeitsstand im Fettabscheidebehälter 1 bis das Abwasser über den Auslass 3 aus dem Fettabscheidebehälter ausläuft.

In einem Bodenbereich des Fettabscheidebehälters 1 setzt eine Umlaufleitung 9 an, durch die Mittels einer Homogenisierungspumpe 10 Flüssigkeit zu einem Abpumpventil 11, welches hier als Dreiwegeventil ausgebildet ist, gefördert wird. Durch das Abpumpventil 11 kann der Inhalt des Fettabscheidebehälters 1 in Richtung einer Abpumpleitung 12 aus dem System abgeführt werden, zum Beispiel um den Fettabscheidebehälter 1 zu entleeren oder zu reinigen. Über einen zweiten Ausgang ist das Abpumpventil 11 mit einer Homogenisierungsdüse 13 verbunden, über welche aus dem Fettabscheidebehälter 1 entnommene Flüssigkeit unter Druck zurück in den Fettabscheidebehälter 1 gebracht werden kann. Durch das Einspeisen unter Druck können feste Fettbestandteile die an der Abwasseroberfläche verhärten und einen Panzer bilden können, aufgebrochen werden.

In einem Behälter 14 werden biologisch-chemisch aktive Bestandteile 15, wie Bakterien und/oder Enzyme, vorgehalten. Über eine Zuführungsleitung 16 können diese mittels einer Dosierpumpe 17 dem Fettabscheidebehälter 1 zugeführt werden. Die Zuführung der aktiven Bestandteile kann dabei zum Beispiel direkt in den Einlass 2 erfolgen oder in den Einströmkanal 4.

Mit der Homogenisierungspumpe 10, dem Abpumpventil und der Dosierpumpe 17 ist eine gemeinsame Steuerung 18 verbunden.

Der Betrieb der Fettabscheidung kann günstigerweise an typische Betriebszyklen eines Kantinen- und Restaurantbetriebes angepasst sein und mittels einer programmierbaren Steuerung 18 weitestgehend automatisiert ablaufen. Wenn tagsüber ein stetiger Zustrom von unbehandeltem Abwasser aus der Küche auftritt, wird der Fettabscheidebehälter 1 in der Einleitungsphase betrieben, sodass das im Abwasser befindliche Fett durch seine geringere Dichte aufschwimmt. Dort verbleibt es, während das Abwasser mit einem nun deutlichen geringeren Fettgehalt durch den Auslass 3 ausgeleitet wird. Bakterien und Enzyme, welche sich im Fettabscheidebehälter befinden, können aktiv Fett abbauen. Dabei sollen Strömungsbewegungen im Fettabscheidebehälter 1 möglichst minimiert werden, wodurch sich das Fett an der Oberfläche agglomeriert und Bakterien und Enzyme zusammen mit anderen, schwereren Bestandteilen des Abwassers dazu neigen, abzusinken.

Nach Betriebsende in der Küche, also beispielsweise abends, wenn in der folgenden Nacht bis zur erneuten Aufnahme des Betriebes an einem folgenden Tag praktisch kein Zufluss von fetthaltigem Abwasser erfolgt, werden die Homogenisierungsphase und Beruhigungsphase durchgeführt. Eine wirksame Homogenisierung mit der gewünschten Steigerung des Fettabbaus kann bereits nach einer etwa 5 bis 10-minütigen Homogenisierungsphase erreicht werden. Günstiger ist eine Zeit für die Homogenisierung von wenigstens 15 Minuten und insbesondere 30 Minuten. Durch lange Homogenisierung wird eine möglichst feine Zerteilung von zuvor agglomerierten Fetten sowie eine gleichmäßige Verteilung von Wasser, Fetten und aktiven Bestandteilen erreicht.

Die Art der Homogenisierungsphase kann ähnlicher Weise auch im Rahmen einer eingangs beschriebenen Reinigungsroutine innerhalb des Regelbetriebs durchgeführt werden. Im Ausführungsbeispiel ist die Homogenisierungsphase ein Teil des Regelbetriebes. Nach der Homogenisierungsphase innerhalb des Regelbetriebes kann der homogenisierte Inhalt des Abscheidebehälters im Abscheidebehälter verbleiben, um ohne Unterbrechung des Regelbetriebes in die Beruhigungsphase überzugehen. Die Beruhigungsphase des homogenisierten Inhalts erfolgt insbesondere getrennt von der Reinigungsphase/-routine.Grundsätzlich können die Beruhigungsphase und die Homogenisierungsphase mit den fetthaltigen Abwässern in demselben Abscheidebehälter durchgeführt werden. Dadurch kann Platz gespart werden. In den hiesigen Ausführungsformen wird in diesen Behälter auch das fetthaltige Abwasser eingeleitet und es findet dort der biologisch und/oder chemische Abbau statt.

Zum Zeitpunkt der Wiederaufnahme des Betriebes in der Küche soll wieder eine stabile Phasenschichtung von Fett und Wasser hergestellt sein. Dazu sollte rechtzeitig vor dem erneuten Einleiten von Abwasser die Homogenisierungsphase beendet werden und die Beruhigungsphase beginnen, in der in dem homogenisierten Abwasser der Abbau von Fetten erfolgt, während eine allmähliche Trennung von Wasser und Fett erfolgt. Wenn von neuem die Einleitungsphase beginnt, kann so neues, unbehandeltes Wasser eingeleitet werden und Abwasser mit einem durch Schwerkraftabscheidung geringerem Anteil an Fett aus dem Fettabscheidebehälter 1 entnommen werden. Eine günstige Dauer für die Beruhigungsphase ist wenigstens eine Stunde und insbesondere wenigstens zwei Stunden.

Eine Reinigungsroutine kann, wie eingangs in Bezug auf den Stand der Technik beschrieben, durchgeführt werden.

Aktive Bestandteile 15 können aus dem Behälter 14 in den Fettabscheidebehälter 1 zugegeben werden, um für einen kontinuierlichen Fettabbau sicherzustellen. Die Zugabe kann dabei regelmäßig zu jeder Homogenisierung, in bestimmten zeitlichen Intervallen oder immer dann, wenn mittels eines optionalen Sensors eine zu niedrige Konzentration aktiver Bestandteile 15 im Fettabscheidebehälter 1 festgestellt wird. Die Menge von aktiven Bestandteilen 15 im Fettabscheidebehälter 1 kann abhängig von der Menge an für die aktiven Bestandteile notwendigen Nährstoffen im Abwasser steigen oder sinken. Außerdem können aktive Bestandteile 15 zusammen mit dem Abwasser durch den Auslass aus dem Fettabscheidebehälter 1 herausgetragen werden.

Um eine besonders gute Homogenisierung für einen langen Zeitraum aufrechtzuerhalten kann am Ende einer Beruhigungsphase, in welcher sich die Bestandteile des Abwassers entmischen, eine neue Homogenisierungsphase mit anschließender Beruhigungsphase stattfinden.

Die Durchführung einer wie zuvor beschriebenen Einleitungsphase führt zu einem stetigen Anwachsen des Fettes an der Oberfläche, welches regelmäßig, wenn eine von der Anlage abhängige Maximalmenge erreicht ist, aus dem Fettabscheidebehälter 1 entnommen wird. Durch die günstige Durchführung von Homogenisierung und Beruhigung in Verbindung mit den aktiven Bestandteilen ist es möglich, die Menge des sich in dem Fettabscheidebehälter 1 ansammelnden Fettes signifikant zu reduzieren und so die zwischen zwei Reinigungs- beziehungsweise Entleerungsvorgängen mehr Zeit vergehen zu lassen. Erprobungen der Erfindung legen nahe, dass eine Reduzierung des Anwachsens der Fettschicht um bis zu 90% möglich ist. Zur Reinigung und Entnahme des im Fettabscheidebehälter angesammelten Fettes werden ebenfalls die Umlaufleitung und Homogenisierungspumpe verwendet um Fettagglomerationen aufzubrechen und pumpfähig zu machen. Der Inhalt wird dann über die Abpumpleitung aus dem Fettabscheidebehälter abgepumpt.

Die Einleitungsphase, Homogenisierungsphase und Beruhigungsphase innerhalb eines ununterbrochenen Regelbetriebes ablaufen und als Teile des Regelbetriebes verstanden werden. Im Regelbetrieb wird ein Erzeuger der fetthaltigen Abwässer, wie beispielweise eine Küche, ungehindert weitergeführt, unabhängig von seinen Arbeits- und Ruhzeiten, also wenn die Küche betrieben wird oder wenn die Küche beispielweise zu Nachtzeiten geschlossen bzw. nicht betrieben wird. Der Erzeuger muss also selbst kaum Rücksicht auf die innerhalb des Abscheidebehälters stattfindende Abbau von Fetten nehmen. Dies erleichtert den kontinuierlichen Küchenbetrieb.

Von dem Regelbetrieb können klassische Wartungsarbeiten abgegrenzt werden, bei welchen bestimmte Arbeiten separat durchgeführt werden müssen und Einfluß auf den Betrieb des Erzeugers haben. Während Reinigungsroutinen und Abwasseraufbereitungsmaßnahmen im Stand der Technik häufig den Betrieb des Erzeugers beeinflussen und als separate Wartung abläuft, ist die Reinigungsroutine der hiesigen Erfindung in den Regelbetrieb integrierbar. Dies gilt insbesondere für das Homogenisieren gemäß der Erfindung während des Betriebes.

Dagegen sind beispielsweise Maßnahmen zum Homogenisieren im Stand der Technik Teil der Wartung, bei welchen dafür gesorgt werden muss, dass der Betrieb des Erzeugers unterbrochen werden muss. Die erste Ausführungsform mit nur einem Abscheidebehälter und ohne Nachbehandlungsbehälter könnte sich bei zu erwartendem geringen Fettanteil im Abwasser eignen, etwa für Abwasser aus einem Speisesaal ohne Küche, und/ oder für Abwässer aus einem Geschirrspüler.

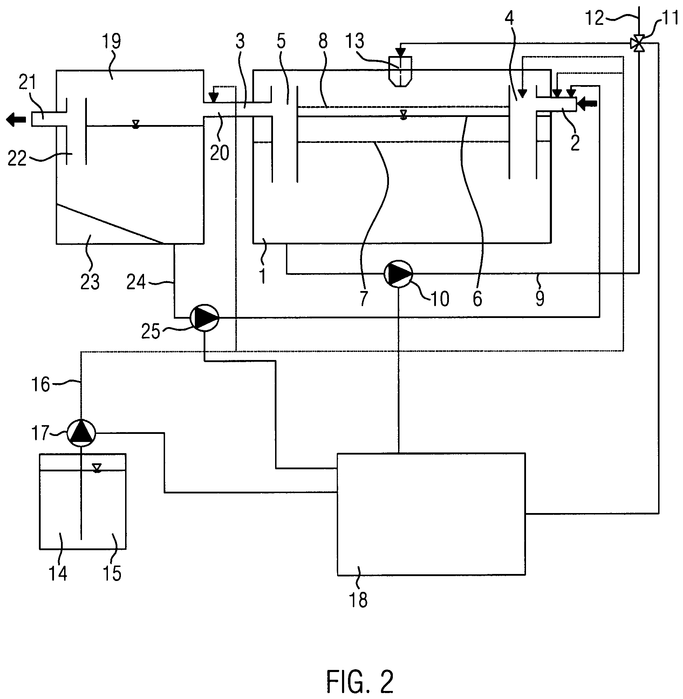

In Figur 2 ist zusätzlich zum Fettabscheidebehälter 1 ein Nachbehandlungsbehälter 19 vorgesehen, wobei ein Nachbehandlungseinlass 20 direkt an den Auslass 3 des Fettabscheidebehälters 1 gekoppelt ist, sodass Abwasser, welches den Fettabscheidebehälter 1 verlässt, in den Nachbehandlungsbehälter 19 eingeleitet wird. Weiterhin verfügt der Nachbehandlungsbehälter über einen Nachbehandlungsauslass 21, welcher zum Beispiel an die Kanalisation angeschlossen ist. An den Nachbehandlungsauslass 21 ist ein Nachbehandlungsauslasskanal 22 gekoppelt.

Im Nachbehandlungsbehälter 19 wird ähnlich wie im Fettabscheidebehälter 1 eine besonders geringe Flüssigkeitsbewegung angestrebt, sodass schwerere Bestandteile und möglichst noch in dem Abwasser befindliche Enzyme und Bakterien zu Boden sinken und eine Art Bodensatz 23 bilden, sodass möglichst wenige aktive Bestandteile 15 das System verlassen.

Der sich im unteren Bereich des Nachbehandlungsbehälters 19 bildende Bodensatz 23 kann durch eine am Boden des Nachbehandlungsbehälters 19 ansetzende Rückführungsleitung 24 mittels einer Rückführungspumpe 25 zurück in den Einlass 2 des Fettabscheidebehälters gepumpt werden. Damit wird einerseits eine Reinigung des Nachbehandlungsbehälters 19 erreicht sowie ein zu starkes Anwachsen des Bodensatzes vermieden, wobei gleichzeitig dem Fettabscheidebehälter aktive Bestandteile 15 zugeführt werden, die ohne die Verwendung des Nachbehandlungsbehälters 19 aus dem System gespült worden wären.

Im Nachbehandlungsbehälter kann außerdem ein biologisch-chemischer Abbau von im Abwasser befindlichen Fetten, insbesondere jenen, die mit dem Wasser eine Emulsion bilden, erfolgen. Dazu ist auch der Nachbehandlungsbehälter mit der Zuführungsleitung 16 für aktive Bestandteile aus dem Behälter 14 gekoppelt.

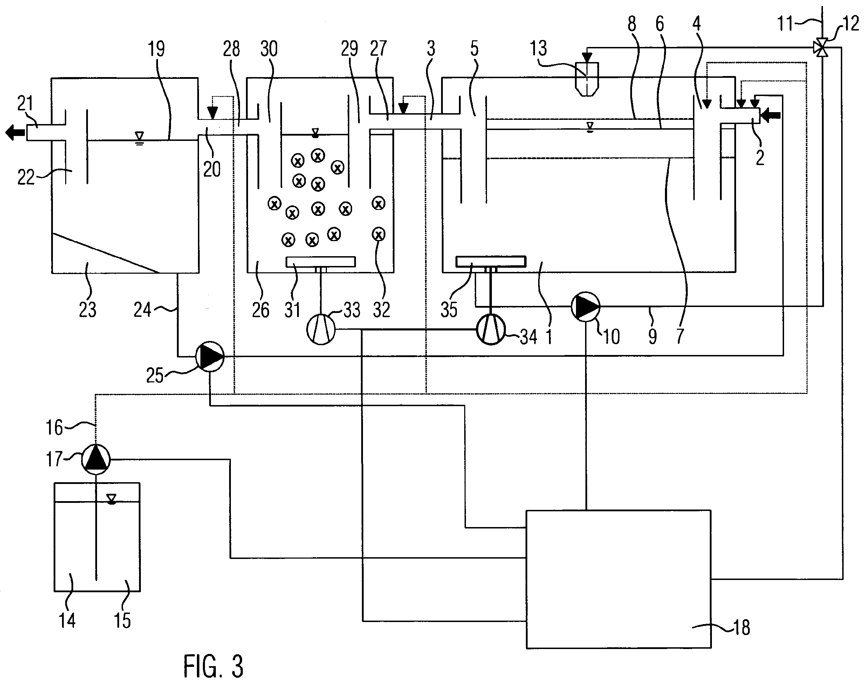

In Figur 3 ist zwischen dem Nachbehandlungsbehälter 19 und dem Fettabscheidebehälter 1 ein Biologiebehälter 26 zwischengeschaltet, wobei der Auslass 3 des Fettabscheidebehälters 1 mit einem Biologieeinlass 27 des Biologiebehälters 26 gekoppelt ist und der Nachbehandlungseinlass 20 mit einem Biologieauslass 28 des Biologiebehälters 26. Am Biologieeinlass 27 und am Biologieauslass 28 sind jeweils ein Strömungskanal 29, 30 zur Strömungsberuhigung angeordnet.

Der Biologiebehälter 26 ist ausgelegt, vor allem den biologisch-chemischen Abbau von Fett zu befördern. Es können Füllkörper eingefügt sein, an welchen Bakterien und Enzyme anhaften können und so besser im Biologiebehälter verbleiben.

Mittels Kompressoren (ein oder mehrere) 33 wird sauerstoffhaltige Druckluft durch Belüfterkerzen 31 in den Biologiebehälter 26 eingeleitet, welche von einigen Enzymen und Bakterien zum aeroben Fettabbau verwendet werden kann und zur Verwirbelung und Durchmischung der Abwasserbestandteile beiträgt.

In ähnlicher Weise kann, wie im dritten Ausführungsbeispiel gezeigt, ebenfalls über weitere Kompressoren 34 und zum Beispiel Belüfterkerzen 35 Luft in den Fettabscheidebehälter 1 eingebracht werden.

Die im Vergleich zum ersten Ausführungsbeispiel (Fig. 1) im zweiten (Fig. 2) und dritten (Fig. 3) zusätzlich vorgesehenen Behälter zielen darauf ab größere Mengen Abwasser oder stärker verschmutzte Abwasser zu behandeln und gleichzeitig eine möglichst platzsparende Anlage zu verwenden. Dementsprechend könnte das zweite Ausführungsbeispiel für eine kleine Restaurantküche und das dritte Ausführungsbeispiel für eine Großküche verwendet werden.

Die Verwendung der vorliegenden Erfindung im Bereich der Behandlung von Küchenabwässern ist als beispielhaft zu verstehen, sodass das beschriebene Verfahren zur Behandlung anderer Arten von Abwässern und Ölen und Fetten anwendbar ist. In diesem Sinn kann als Fett auch Öle oder andere zu behandelnde leichte Flüssigkeiten verstanden werden.

## Patentansprüche

1. Verfahren zum Behandeln fetthaltiger Abwässer in einem Abscheidebehälter (1), wobei
in einer Einleitungsphase fetthaltiges Abwasser in einen Abscheidebehälter (1) geleitet wird während fettreduziertes Abwasser aus dem Abscheidebehälter (1) ausgeleitet wird, wobei in dem Abscheidebehälter (1) eine schwerkraftgetriebene Abscheidung von Fett erfolgt, und
in einer Homogenisierungsphase eine Homogenisierung von in dem Abscheidebehälter (1) befindlichen Abwasser und darin abgeschiedenem Fett erfolgt, wobei in der Homogenisierungsphase Flüssigkeit im Bodenbereich des Abscheidebehälters aus dem Abscheidebehälter (1) entnommen wird und über eine Homogenisierungsdüse (13) unter Druck zurück auf die Abwasseroberfläche in den Abscheidebehälter (1) eingespeist wird,
**dadurch gekennzeichnet, dass**
in einer Beruhigungsphase, und optional in einer Einleitungsphase, in dem in der Homogenisierungsphase homogenisierten Inhalt des Abscheidebehälters (1) ein biologischer und/oder chemischer Abbau von Fetten, insbesondere mittels Bakterien und/oder Enzymen erfolgt.

2. Verfahren nach einem der vorherigen Ansprüche, **dadurch gekennzeichnet, dass** während der Homogenisierungsphase und/oder der Beruhigungsphase kein wesentlicher Zufluss in den Abscheidebehälter (1) erfolgt.

3. Verfahren nach einem der vorherigen Ansprüche, **dadurch gekennzeichnet, dass**
der homogenisierte Inhalt des Abscheidebehälters (1) zwischen der Homogenisierungsphase und der Beruhigungsphase in dem Abscheidebehälter verbleibt.

4. Verfahren nach einem der vorherigen Ansprüche, **dadurch gekennzeichnet, dass** die Homogenisierungsphase und/oder die Beruhigungsphase getrennt von der Einleitungsphase erfolgt.

5. Verfahren nach einem der vorherigen Ansprüche, **dadurch gekennzeichnet, dass** aus dem Abscheidebehälter (1) entnommenes Abwasser direkt oder indirekt in wenigstens einen Nachbehandlungsbehälter (19, 26) geleitet wird, wobei Abwasser oder vom Abwasser separierte Bestandteile aus dem Nachbehandlungsbehälter (19, 26) während und/oder zu Beginn der Homogenisierungsphase in den Abscheidebehälter (1) eingeleitet werden.

6. Verfahren nach einem der vorherigen Ansprüche, **dadurch gekennzeichnet, dass** während der Homogenisierungsphase und/oder der Beruhigungsphase ein sauerstoffhaltiges Gas oder Gasgemisch in den Abscheidebehälter (1) oder in den Nachbehandlungsbehälter (19, 26) eingeleitet wird.

7. Verfahren nach einem der vorherigen Ansprüche, **dadurch gekennzeichnet, dass** Bakterien und/oder Enzyme in einem Behälter (14) bevorratet sind und wenigstens in den Abscheidebehälter (1) und oder/einen Nachbehandlungsbehälter (19, 26) zugeführt werden.

8. Verfahren nach einem der vorherigen Ansprüche, **dadurch gekennzeichnet, dass** innerhalb eines Verfahrenszyklus die Homogenisierungsphase wenigstens 10 Sekunden und insbesondere wenigstens 5 Minuten und/oder nicht mehr als 1 oder 3 Stunden dauert.

9. Verfahren nach einem der vorherigen Ansprüche, **dadurch gekennzeichnet, dass** innerhalb eines Verfahrenszyklus die Beruhigungsphase wenigstens eine Stunde und insbesondere wenigstens 2 Stunden und/oder nicht mehr als 9 oder 12 Stunden dauert.

## Claims

1. Method for treating fatty wastewater in a separation tank (1), wherein
in an inlet phase, fatty wastewater is fed into a separation tank (1) while fat-reduced wastewater is discharged from the separation tank (1), wherein in the separation tank (1) a gravity-driven separation of fat takes place, and
in a homogenization phase, homogenization of the wastewater in the separation tank (1) and the fat separated therein takes place, wherein, in the homogenization phase, liquid is removed from the bottom region of the separation tank (1) and fed back under pressure via a homogenization nozzle (13) to the wastewater surface in the separation tank (1),
**characterized in that**
in a settling phase, and optionally in an inlet phase, the contents of the separation tank (1) homogenized in the homogenization phase undergo biological and/or chemical degradation of fats, in particular by means of bacteria and/or enzymes.

2. Method according to one of the previous claims, **characterized in that** during the homogenization phase and/or the settling phase, no significant inflow into the separation tank (1) takes place.

3. Method according to one of the previous claims, **characterized in that**
the homogenized contents of the separation tank (1) remain in the separation tank between the homogenization phase and the settling phase.

4. Method according to one of the previous claims, **characterized in that** the homogenization phase and/or the settling phase takes place separately from the introduction phase.

5. Method according to one of the previous claims, **characterized in that** wastewater removed from the separation tank (1) is fed directly or indirectly into at least one post-treatment tank (19, 26), wherein wastewater or components separated from the wastewater are introduced from the post-treatment tank (19, 26) into the separation tank (1) during and/or at the beginning of the homogenization phase.

6. Method according to one of the previous claims, **characterized in that** during the homogenization phase and/or the settling phase, an oxygen-containing gas or gas mixture is introduced into the separation tank (1) or into the post-treatment tank (19, 26).

7. Method according to one of the previous claims, **characterized in that** bacteria and/or enzymes are stored in a container (14) and are fed at least into the separation container (1) and/or a post-treatment container (19, 26).

8. Method according to one of the previous claims, **characterized in that** within a process cycle, the homogenization phase lasts at least 10 seconds and in particular at least 5 minutes and/or no more than 1 or 3 hours.

9. Method according to one of the previous claims, **characterized in that** within a process cycle, the settling phase lasts at least one hour and in particular at least 2 hours and/or no more than 9 or 12 hours.

## Revendications

1. Procédé de traitement d'eaux usées grasses dans un séparateur (1), dans lequel
dans une phase d'introduction, les eaux usées grasses sont introduites dans un séparateur (1) tandis que les eaux usées dégraissées sont évacuées du séparateur (1), dans lequel une séparation des graisses par gravité a lieu dans le séparateur (1), et
dans une phase d'homogénéisation, une homogénéisation des eaux usées présentes dans le séparateur (1) et des graisses qui y sont séparées a lieu, dans laquelle, dans la phase d'homogénéisation, le liquide dans le fond du séparateur est prélevé du séparateur (1) et renvoyé sous pression sur la surface des eaux usées dans le séparateur (1) via une buse d'homogénéisation (13),
**caractérisé**
**en ce que**, dans une phase de décantation, et éventuellement dans une phase d'introduction, le contenu du séparateur (1) homogénéisé dans la phase d'homogénéisation subit une dégradation biologique et/ou chimique des graisses, en particulier au moyen de bactéries et/ou d'enzymes.

2. Procédé selon l'une des revendications précédentes, **caractérisé en ce que**, pendant la phase d'homogénéisation et/ou la phase de décantation, aucun afflux significatif n'entre dans le séparateur (1).

3. Procédé selon l'une des revendications précédentes, **caractérisé en ce que** le contenu homogénéisé du séparateur (1) reste dans le séparateur entre la phase d'homogénéisation et la phase de décantation.

4. Procédé selon l'une des revendications précédentes, **caractérisé en ce que** la phase d'homogénéisation et/ou la phase de décantation ont lieu séparément de la phase d'introduction.

5. Procédé selon l'une des revendications précédentes, **caractérisé en ce que** les eaux usées prélevées dans le séparateur (1) sont conduites directement ou indirectement dans au moins une cuve de post-traitement (19, 26), dans lequel les eaux usées ou les composants séparés des eaux usées dans la cuve de post-traitement (19, 26) sont introduits dans le séparateur (1) pendant la phase d'homogénéisation et/ou au début de celle-ci.

6. Procédé selon l'une des revendications précédentes, **caractérisé en ce que**, pendant la phase d'homogénéisation et/ou la phase de décantation, un gaz ou un mélange de gaz contenant de l'oxygène est introduit dans le séparateur (1) ou dans la cuve de post-traitement (19, 26).

7. Procédé selon l'une des revendications précédentes, **caractérisé en ce que** des bactéries et/ou des enzymes sont stockées dans une cuve (14) et sont alimentées au moins dans le séparateur (1) et/ou dans une cuve de post-traitement (19, 26).

8. Procédé selon l'une des revendications précédentes, **caractérisé en ce que**, dans un cycle de procédé, la phase d'homogénéisation dure au moins 10 secondes, et en particulier au moins 5 minutes et/ou pas plus de 1 ou 3 heures.

9. Procédé selon l'une des revendications précédentes, **caractérisé en ce que**, dans un cycle de procédé, la phase de décantation dure au moins une heure, et en particulier au moins 2 heures et/ou pas plus de 9 ou 12 heures.
